# EUROPEAN PATENT APPLICATION

(11) **EP 1 908 966 A2**
(43) Date of publication of application: **09.04.2008**
(21) Application number: 07380185.4
(22) Date of filing: 26.06.2007
(51) Int. Cl.: F16B 29/00, F16B 19/10

(54) **Rivet manufactured for non-metallic materials**

(30) Priority: 28.09.2006 ES 200602116
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(57) **Abstract**

The invention refers to a rivet made to join non-metallic materials; on the outer side surface or neck (11) it has filleting forming a thread (16), and it is designed for use in the automobile sector.

The purpose of the invention is to be applied to join or to immobilize two or more non-metal pieces, in the sector of parts of pieces, elements, and devices for the automobile sector, replacing and eliminating those that are known, in order to eliminate metal pieces.

## Description

The present invention consists, as indicated in the heading, of a "PERFECTED RIVET MANUFACTURED FOR NON-METALLIC MATERIALS" the new characteristics, structure, and design of which serve the purpose for which it has specifically been designed with the greatest safety and efficiency.

More specifically, the invention refers to a rivet made to join non-metallic materials; on the outer side surface or neck it has filleting forming a thread, and it is designed for use in the automobile sector.

The purpose of the invention is to be applied to join or to immobilize two or more non-metal pieces, in the sector of parts of pieces, elements, and devices for the automobile sector, replacing and eliminating those that are known, in order to eliminate metal pieces.

There are various types of pieces for the same purpose as that of the invention, and they can therefore be considered as the State of the Art; on one hand there are so-called metal rivets metal made by shaping a metal piece into a cylinder, with the aid of the corresponding rod head joined to a rod, which, when it is stretched, deforms one end of the piece, so that its diameter is increased and the rivet holes to which they are applied are held inside, holding two or more pieces, and on the other hand, a similar function is served by so-called metal eyes that join one or more pieces by simply deforming the ends, using pliers with the tips especially designed for this purpose.

In USA Invention #3521521, a blind rivet is described with a body divided into an upper and a lower part, with each part having its respective male and female elements in the shape of a screw; it is fixed in place by turning the rod and therefore allowing the two parts of the body of the rivet to fit together with the upper part overlapping so that the body of the rivet as a whole expands outwards radially and presses firmly against the part of the board.

Spanish Invention Patent # 78501 describes and claims a blind rivet with the purpose of increasing the waterproofing of the two pieces; there, the body is bent outwards in a radial direction and finally back on itself through the lifting of the rod, expanding the body of the rivet, then, radially.

Unlike the State of the Art described above, the present invention is the manufacturing of rivets that are a single piece for joining plastic materials, among others, obtained by thermal shaping and applying them for the same purpose, using the same procedure as for manufacturing the rivets used to join metal materials, but including conventional threading on the side surface of the neck of the rivet, in order to strengthen the retention of the pieces that are to be joined when the head of the rod and the body of the rivet expand outwards radially, taking advantage of the fact that the rivet and pieces are all not metal and have similar values of elasticity.

The perfection, then, is based on the application of rivets made of a single piece of aluminium, iron, or similar materials, to the joining of pieces obtained from materials that can be moulded with non-metallic thermal fusion, and providing their neck with a threaded shape, achieving greater retention of the rivet in the pieces to be joined, thanks to their ability to expand outwards radially, as well as that achieved with the deformation obtained by the previously described conventional means due to the outer threading.

Other details and characteristics will be set out in the course of the description that follows, referring to the drawings that accompany this report, which show but are not limited to the practical making of the invention.

Below is a detailed list of the main parts of the rivet invented, and which are numbered in the figures that are included: (10) rivet, (11) neck, (12) closing head, (13) outer side surface of the neck (11), (14) inner surface of the neck (11), (15) threading, (16) thread, (17-18) pieces to be joined, (19) head of the rod, (20) rod , (21) groove, (22) head of the rivet, and (23) rivet hole surfaces.

Figure 1 is a longitudinal section of a rivet (10) according to the State of the Art, prior to deformation, placed in position to be able to join two pieces (17-18), which it crosses, with the aid of a rod (20), the lower part of which has a head that is (19) noticeably spherical.

Figure 2 is a longitudinal section of a rivet (10) according to the State of the Art, after the deforming of the lower part of the neck (11), holding the pieces to be joined (17-18), upon pulling the rod upwards by its upper end, in the direction of the arrow shown (20).

Figure 3 is a longitudinal section view of a rivet (10) made according to the invention, before it is deformed, placed in position to be able to join two pieces (17-18).

Figure 4 is a longitudinal section view of a possible way of making the rivet(10) according to the invention, after its deformation, locking in the pieces to be joined (17-18), upon pulling the rod(20) upwards by its upper end, in the direction of the arrow shown.

Figure 5a is a frontal elevation view of a way of making the rivet (10) according to the invention, before its deformation, where the outer threading is spiral.

Figure 5b is a frontal elevation view of another way of making the rivet (10) according to the invention, before its deformation, where the outer threading is flat.

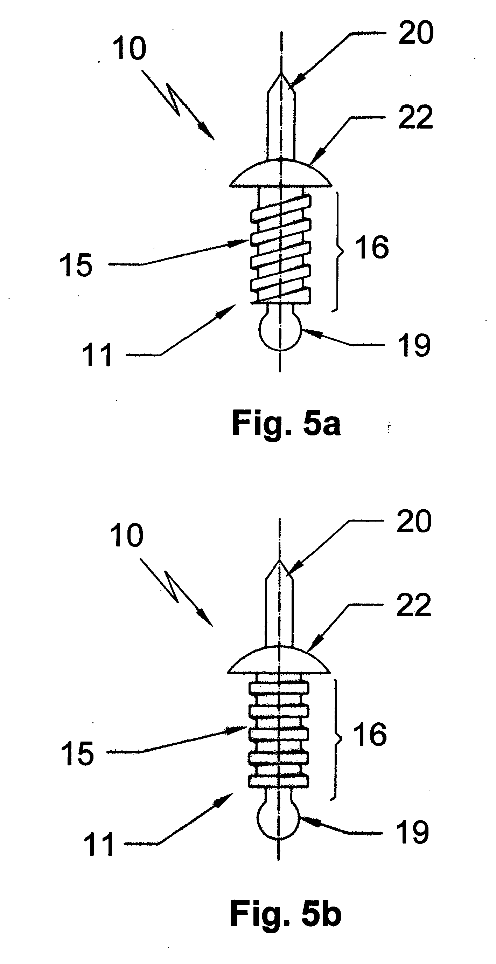

In one of the preferred ways of making the rivet invented, a rivet (10) according to the invention is a piece of plastic or a similar material obtained from injection moulding, and it has a cylindrical neck (11) and on the upper part is the head of the rivet (22); inside there is a groove(21) on the inner side surface (14), while the outer side surface (13) of the neck (11) is threaded (15) creating a spiral (16) outer threading, in the case of figure 5a, or flat threading in the case of figure 5b.

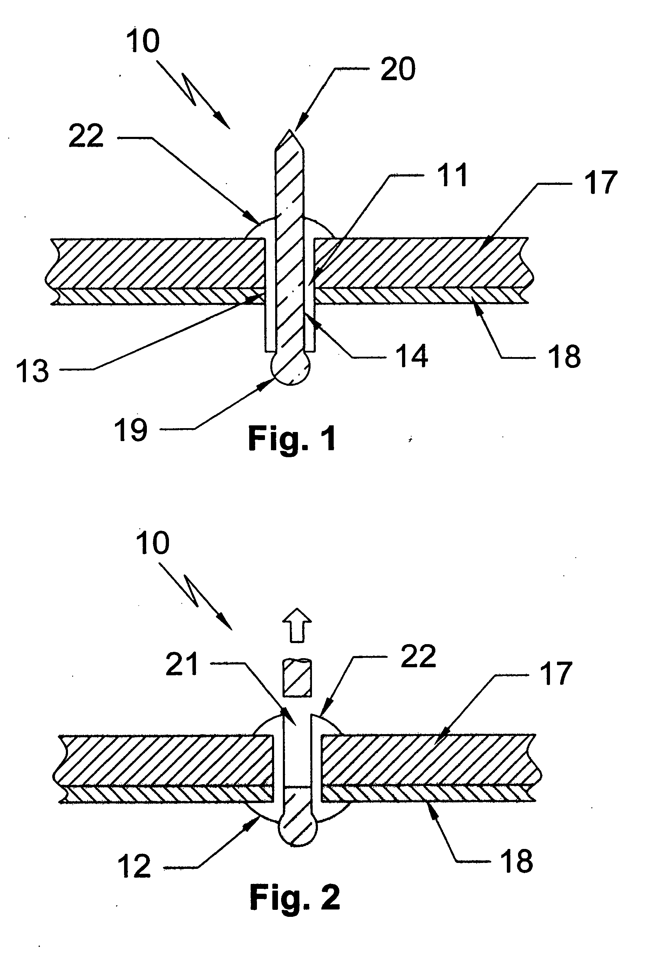

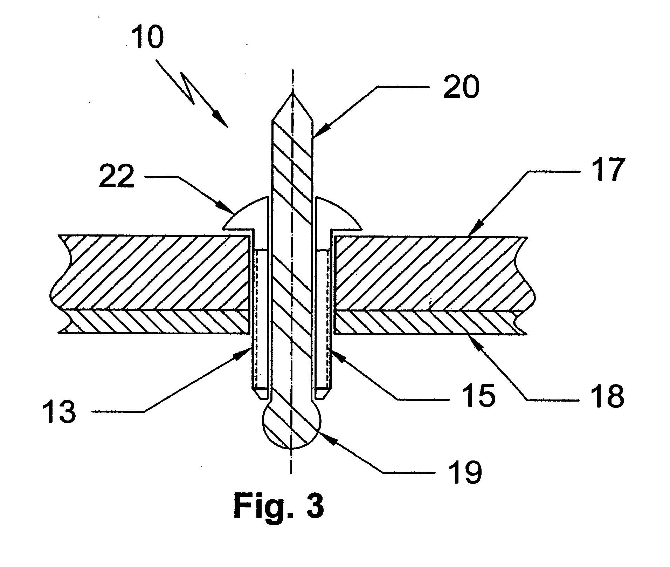

Conventional rivets (10) that form a part of the State of the Art, see figures 1 and 2, although they do have the same general configuration as those of the invention, are mainly manufactured in iron and aluminium and their side surface (13) is smooth. So that they can serve their purpose as a way of joining two pieces (17-18), their lower end or closing head (12) opposite the head (22), is subjected to a deforming pressure by way of a head (19) that is noticeably spherical, which is pulled on by the upper end of the rod (20), see figure 3.

The rod (20) passes through the groove (21) and the traction applied on it (19) and its head (20), is what causes the deformation of the lower end of the rivet (10) and of the neck (11) and the formation of a second head (12), the pieces to be joined (17-18) being caught between the two heads (12) and (22), as can be seen in figure 2.

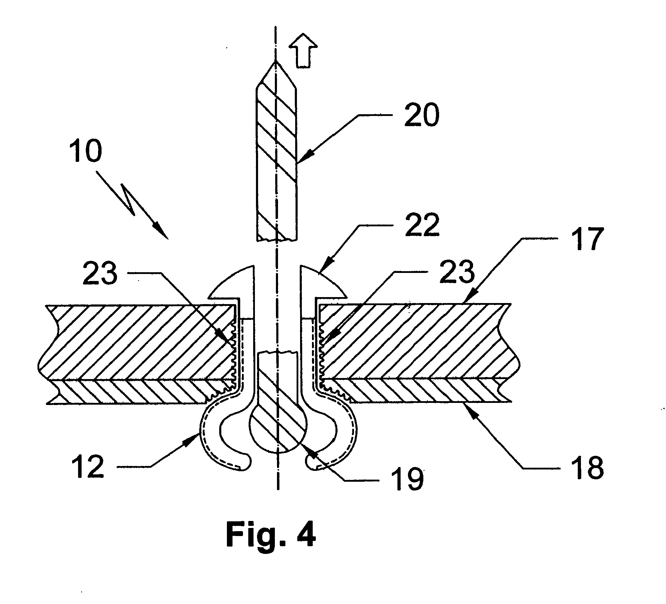

With the rivet (10) of the invention, the pressure applied by the two heads: (12) the lower one and (22) the upper one (10) is complemented by the pressure applied by the threading (15) of the neck (11) and the closing head (12) on the surface corresponding to the rivet hole (23) foreseen in the pieces to be joined (17-18), which is slightly deformed by the action of the thread (16), see figure 4.

The placement of the rivets (10) recommended is not limited to the joining of two pieces, but, like conventional rivets, they can also be used to join two or more pieces, the deformation of the threading (15) of the thread (16) being a key element for improving the joining of the two pieces (17-18), due to their adaptability and that of the flexible fluting of the walls of the orifice of the pieces (17-18) avoiding axial play when they are subject to shearing.

The rivets (10) according to the invention, although they are intended for the automobile sector, may be used in other sectors, their metallic nature being an advantageous property, as this makes them sturdy and hard, according to the nature of the pieces to be joined (plastic materials obtained from thermal shaping) avoiding their moving when they are subjected to shear forces.

The present invention having been sufficiently described along with the attached figures, it is easy to understand that any modifications of details deemed appropriate can be introduced, as long as the essence of the invention remains unchanged and it continues to meet the following claims.

## Claims

1. - "PERFECTED RIVET MANUFACTURED FOR NON-METALLIC MATERIALS" made up of a neck (11) crossed lengthwise by an interior groove (21); in the upper end of this neck (11) there is a head (22), the outer side surface (13) of the neck being smooth, the neck of the rivet fitting (11) into the pieces to be joined (17-18), thanks to a rivet hole foreseen in them (17-18), **characterised by** the rivet (10) having, on its outer side surface (13) of the neck (11) threading (15), to make a thread (16).

2. - "PERFECTED RIVET MANUFACTURED FOR NON-METALLIC MATERIALS" according to the first claim, **characterised by** the rivet (10) holding the pieces to be joined still (17-18) by way of its upper head (22) and the closing head (12), complementing the pressure applied by the heads (22) and (12) on the outer surfaces of (17-18), with the pressure applied by the threading (15) of the neck (11) against the surface corresponding to the rivet hole (23) of the pieces to be joined (17-18).
